# EUROPÄISCHE PATENTSCHRIFT

(11) **EP 0 936 722 B1**
(45) Veröffentlichungstag und Bekanntmachung des Hinweises auf die Patenterteilung: **01.12.2004**
(21) Anmeldenummer: 98118068.0
(22) Anmeldetag: 24.09.1998
(51) Int. Cl.: H02K 7/116, H02K 11/00

(54) **Elektromotorischer Antrieb**
Electric motor drive
Système d'entrainement à moteur électrique

(30) Priorität: 16.02.1998 DE 19806209
(43) Veröffentlichungstag der Anmeldung: 18.08.1999
(73) Patentinhaber: ROBERT BOSCH GMBH, 70442 Stuttgart (DE)
(72) Erfinder: Moskob, Frank, 77815 Buehl (DE)

(56) Entgegenhaltungen:
- EP-A- 0 474 904
- EP-A- 0 538 495
- DE-A- 4 225 496
- DE-A- 19 523 789
- US-A- 4 857 812

## Beschreibung

### Stand der Technik

Die Erfindung geht aus von einem elektromotorischen Antrieb nach dem Oberbegriff des Hauptanspruchs.
Aus der Druckschrift DE-OS 43 37 390 ist bereits ein elektromotorischer Antrieb mit einem Elektromotor, einem Getriebe in einem Getriegehäuse und einem Elektronikmodul bekannt. Das Elektronikmodul weist ein Elektronikchassis auf. An dem Elektronikchassis ist ein Flanschteil angeordnet, das die Verbindung zwischen einem Poltopf des Elektromotors und dem Getriebegehäuse herstellt. Ferner ist das Elektronikmodul mit einem Clipvorsprung in einer Clips-Hinterschneidung an dem Getriebegehäuse befestigt.

Die EP 0 474 904 A1 beschreibt einen Fensterheberantrieb mit einem Elektromotor und einer als Schneckenwelle ausgebildeten Ankerwelle, die mit einem in einem Getriebegehäuse angeordneten Schneckengetriebe zusammenwirkt. Dabei ist das Getriebegehäuse einstückig mit dem Elektronikgehäuse ausgebildet, die zusammen mit einem gemeinsamen, axial zur Ankerwelle montierbaren Deckel verschlossen werden können.

Die EP 0 538 495 A1 zeigt ebenfalls einen Fensterheberantrieb mit einem Motorgehäuse, einem Getriebegehäuse und einem Elektronikgehäuse mit einem elektrischen Verbindungsanschluss zu einer Bürstenhalterung. Der Deckel des Elektronikgehäuses weist einerseits eine axiale Führung auf, die mit einer axialen Führungszunge am Getriebegehäuse zusammenwirkt. Andererseits ist das Elektronikgehäuse mittels eines ein Auge aufweisendes Abstützelement an der Außenwandung des Motorgehäuses fixiert.

Mit der vorliegenden Lösung wird angestrebt, eine bessere Austauschbarkeit von Elektronik- und Gehäusebauteilen zu ermöglichen und damit die Verfügbarkeit und Wartbarkeit des Motors zu verbessern.

### Vorteile der Erfindung

Der erfindungsgemäße elektromotorische Antrieb mit den Merkmalen des Hauptanspruchs hat den Vorteil, daß das Elektronikgehäuse aus einem Elektronikgehäusekörper und einem an dem Getriebegehäuse lösbar angeordneten, den Elektronikgehäusekörper teilweise nach außen abschließenden Elektronikgehäusedeckel besteht. Diese Anordnung ermöglicht eine leichtere Zugänglichkeit von elektronischen Bauteilen in dem Elektronikgehäuse durch einfaches Abnehmen des Elektronikgehäusekörpers.

Durch die in den Unteransprüchen aufgeführten Maßnahmen ergeben sich vorteilhafte Weiterbildungen und Verbesserungen der im Hauptanspruch angegebenen Merkmale.

Schäden an dem Elektronikgehäuse, den darin angeordneten Bauteilen oder am Getriebegehäuse durch an dem Elektronikgehäuse oder dem Elektronikgehäusedeckel angreifende Kräfte können in vorteilhafter Weise verhindert werden, wenn zwischen dem Elektronikgehäusedeckel und dem Elektronikgehäuse wenigstens ein Element angeordnet ist, das den Elektronikgehäusedeckel gegen das Getriebegehäuse abstützt. Solche Kräfte können im Extremfall bis zum Bruch eines in dem Elektronikgehäuse angeordneten Bauteils führen. Sie treten etwa bei dem Anbringen oder Lösen einer Steckverbindung an dem Elektronikgehäuse auf.

Eine zweckmäßige Ausgestaltung des abstützenden Elements ist seine Ausführung als eine in wenigstens einer Nut geführte Feder. Dabei kann die Nut an dem Elektronikgehäusedeckel und/oder an dem Getriebegehäuse angeordnet sein. Das Element kann dadurch einfach und preisgünstig hergestellt und montiert werden.

Die Feder wird vorteilhaft gegen Verwindungskräfte versteift, indem eine Querfeder an der Feder angeordnet ist. Darüber hinaus wird durch die Querfeder die Abstützung des Elektronikgehäusedeckels gegen das Getriebegehäuse verbessert.

Von Vorteil ist die Befestigung des Elektronikgehäuses direkt am Elektronikgehäusedeckel. Dadurch vereinfacht sich die Montage und Demontage des Elektronikgehäuses, während sich die Zahl der am Antrieb anzubringenden Befestigungsvorrichtungen reduziert.

Vorteilhaft wird die Montage des Elektronikgehäusedeckels an dem Getriebegehäuse vereinfacht, wenn er mit einer Einhängvorrichtung an dem Getriebegehäuse befestigt ist. Durch die Zugkraft, die die Einhängevorrichtung auf den Elektronikgehäusedeckel ausübt, wird ein zwischen Elektronikgehäusedeckel und Getriebegehäuse angeordnetes Element fixiert. Die Einhängevorrichtung kann besonders einfach durch einen mit einem Gegenrastmittel zusammenwirkenden Rasthaken ausgebildet sein. Die Anbringung eines zusätzlichen Ansatzes am Getriebegehäuse erübrigt sich, wenn das Gegenrastmittel an einem an dem Getriebegehäuse ohnehin bereits vorhandenen Gehäuseanschraubdom angeformt ist.

Eine Weiterbildung der Erfindung sieht vor, daß ein Zwischenflansch an dem Elektronikgehäusedeckel angeordnet ist. Der Zwischenflansch kann beispielsweise am Elektronikgehäusedeckel angeformt, aber auch als separates Bauteil am Elektronikgehäusedeckel mit Befestigungsmitteln befestigt sein. Ein Poltopfgehäuse des Elektromotors und das Getriebegehäuse sind dann über den Zwischenflansch verbunden. Diese Anordnung hat den Vorteil, daß eine Elektronikplatine, beispielsweise mit einem in die Platine integrierten Bürstenhalter, in dem Elektronikgehäusedeckel befestigt sein kann und durch einfaches Abnehmen des Elektronikgehäusekörpers zu Wartungszwecken zugänglich wird.

Weitere vorteilhafte Ausgestaltungen und Weiterbildungen der Erfindung ergeben sich aus den weiteren Unteransprüchen und in Verbindung mit dem nachstehend beschriebenen Ausführungsbeispiel.

### Zeichnung

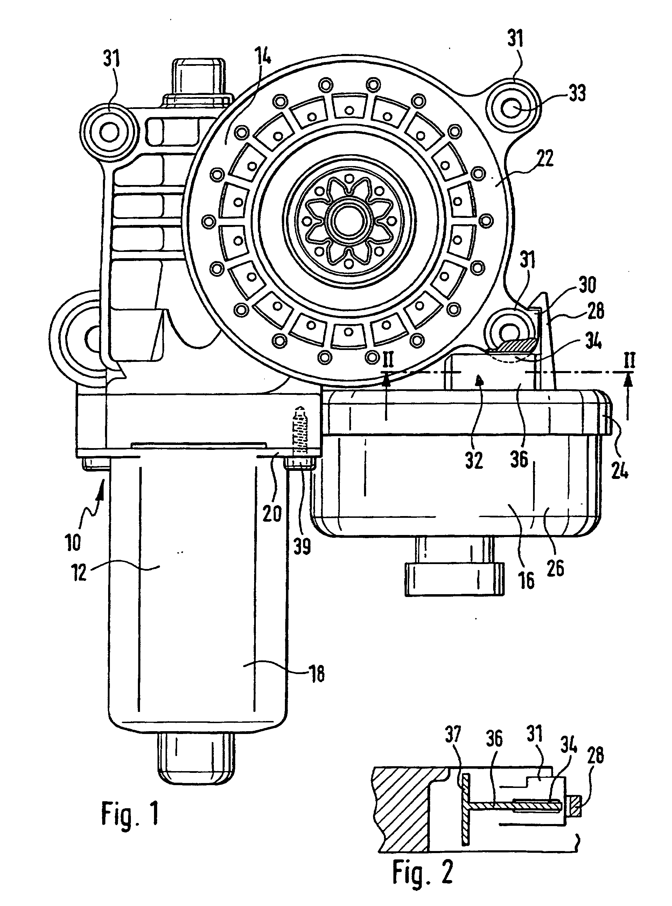

Ein Ausführungsbeispiel der Erfindung ist in den Zeichnungen dargestellt und in der nachfolgenden Beschreibung näher erläutert. Es zeigen
Figur 1 einen Stellantrieb und Figur 2 einen Schnitt durch Befestigungsmittel an einem Elektronikgehäusedeckel entlang der Linie II-II in Figur 1.

### Beschreibung des Ausführungsbeispiels

Ein in der Figur 1 dargestellter Stellantrieb 10 dient zum Verstellen von Ausstattungsteilen eines nicht dargestellten Kraftfahrzeuges, beispielsweise von Fahrzeugsitzen, Schiebefenstern, Schiebedächern usw. Der Stellantrieb 10 weist einen Elektromotor 12 mit einem nachgeordneten Getriebe 14 und einem eine Elektronikplatine mit Motorleistungs- und Steuerelektronik aufnehmenden Elektronikgehäuse 16 auf. Der Elektromotor 12 befindet sich in einem Poltopf 18 mit stirnseitigem Poltopfflansch 20, an den ein Getriebegehäuse 22 angeflanscht ist. Das Elektronikgehäuse 16 besteht aus einem Elektronikgehäusedeckel 24 und einem Elektronikgehäusekörper 26. Der Elektronikgehäusedeckel 24 weist auf seiner von dem Elektromotor 12 abgewandten Seite einen Rasthaken 28 auf, der in einer Rastnase 30 als Gegenrastmittel eingerastet ist. Die Rastnase 30 ist an einem von mehreren Gehäuseanschraubdomen 31 des Getriebegehäuses 22 angeformt. Fehlt der Anschraubdom 31 an genau dieser Stelle übernimmt ein ähnlich geformtes Gebilde aus Kunststoff die Funktion der Rastnase. Ausnehmungen 33 in den Gehäuseanschraubdomen 31 erlauben die Befestigung des Stellantriebs 10 an dem Kraftfahrzeug-Chassis, beispielsweise durch Verschraubungen. Zwischen dem Elektronikgehäusedeckel 24 und dem Getriebegehäuse 22 ist eine Feder 32 in Gestalt zweier zueinander querstehender Stege 36 und 37 angeordnet. Der Steg 36 liegt parallel zu der Zeichenebene der Figur 1 und wird in einer Ausnehmung der Rastnase 30 in Form einer Nut 34 geführt. Die Nut 34 verhindert ein seitliches Abrutschen der Feder 32, die den Elektronikgehäusedeckel 24 gegen das Getriebegehäuse 22 abstützt und eine Verformung des Elektronikgehäusedeckels 24 und des Elektronikgehäuses durch an dem Elektronikgehäuse angreifende Kräfte verhindert. Der querstehende Steg 37 der Feder 32 verbessert die Abstützung, indem er seitliche Kraftkomponenten aufnimmt. Die Feder 32 wird durch die von dem eingerasteten Rasthaken 28 ausgeübte Zugkraft fixiert. Auf seiner dem Elektromotor 12 zugewandten Seite ist der Elektronikgehäusedeckel 24 gemeinsam mit dem Elektronikgehäusekörper 26 zwischen dem Poltopfflansch 20 und dem Getriebegehäuseflansch eingespannt. Der Poltopf 18 ist mittels Schrauben 39 am Getriebegehäuse befestigt. Der Elektronikgehäusekörper 26 ist auf der vom Elektromotor 12 abgewandten Seite am Elektronikgehäusedeckel 24 ebenfalls verschraubt. Zusätzlich hat die Wand des Elektronikgehäusedeckels 24 Aussparungen, in denen am Elektronikgehäusekörper 26 angeordnete Rastmittel einrasten.

## Patentansprüche

1. Elektromotorischer Antrieb mit einem Elektromotor (12) mit einer als Schneckenwelle ausgebildeten Motorankerwelle, die in ein dem Elektromotor (12) nachgeordnetes Schneckengetriebe (14) verlängert ist und in ein Schneckenrad greift, das von einem Getriebegehäuse (22) umgeben ist, sowie einem Elektronikgehäuse (16) zur Aufnahme einer Motorsteuerungs- und/oder Leistungselektronik, und das Elektronikgehäuse (16) einen Elektronikgehäusekörper (26) und einen den Elektronikgehäusekörper (26) nach außen abschließenden Elektronikgehäusedeckel (24) aufweist, wobei der Elektronikgehäusedeckel (24) an dem das Schneckenrad des Schneckengetriebes (14) enthaltenden Teil des Getriebegehäuse (22) lösbar angeordneten ist, **dadurch gekennzeichnet, daß** zwischen dem Elektronikgehäusedeckel (24) und dem Getriebegehäuse (16) wenigstens ein Element (32) angeordnet ist, das den Elektronikgehäusedeckel (24) gegen das Getriebegehäuse (16) abstützt.

2. Elektromotorischer Antrieb nach Anspruch 1, **dadurch gekennzeichnet, daß** das Element zur Abstützung des Elektronikgehäusedeckels (24) eine in wenigstens einer Nut (34) geführte Feder (36) ist.

3. Elektromotorischer Antrieb nach Anspruch 2, **dadurch gekennzeichnet, daß** an der Feder (36) eine Querfeder (37) angeordnet ist.

4. Elektromotorischer Antrieb nach einem der vorhergehenden Ansprüche, **dadurch gekennzeichnet, daß** der Elektronikgehäusekörper (26) an dem Elektronikgehäusedeckel (24) befestigt ist.

5. Elektromotorischer Antrieb nach einem der vorhergehenden Ansprüche, **dadurch gekennzeichnet, daß** der Elektronikgehäusedeckel (24) mit wenigstens einer Einhängevorrichtung (28, 30) an dem Getriebegehäuse (22) befestigt ist.

6. Elektromotorischer Antrieb nach einem der vorhergehenden Ansprüche, **dadurch gekennzeichnet, daß** das Element (32) derart entgegengesetzt gerichtete Kräfte auf den Elektronikgehäusedeckel (24) und das Getriebegehäuse (22) ausgeübt, daß die Einhängevorrichtung (28, 30) und das Element (32) sicher fixiert sind.

7. Elektromotorischer Antrieb nach einem der Ansprüche 5 oder 6, **dadurch gekennzeichnet, daß** die Einhängevorrichtung (28, 30) aus einem Rasthaken (28) besteht, der in ein an dem Getriebegehäuse (22) angeordnetes Gegenrastmittel (30) einrastet.

8. Elektromotorischer Antrieb nach Anspruch 7, **dadurch gekennzeichnet, daß** das Gegenrastmittel (30) an einem Anschraubdom (31) des Getriebegehäuses (22) angeformt ist.

9. Elektromotorischer Antrieb nach einem der vorhergehenden Ansprüche, **dadurch gekennzeichnet, daß** der Elektronikgehäusedeckel (24) durch wenigstens eine Schraubverbindung an dem Getriebegehäuse (22) befestigbar und/oder einklemmbar ist.

10. Elektromotorischer Antrieb nach einem der vorhergehenden Ansprüche, **dadurch gekennzeichnet, daß** der Elektronikgehäusedeckel (24) einen zwischen einem Poltopf (18) des Elektromotors (12) und dem Getriebegehäuse (22) angeordneten Zwischenflansch (20) aufweist.

11. Elektromotorischer Antrieb nach einem der vorhergehenden Ansprüche, **gekennzeichnet durch** die Verwendung als Antriebseinheit für Stellsysteme in Kraftfahrzeugen.

## Claims

1. Electric motor drive having an electric motor (12) with a motor armature shaft which is embodied as a worm wheel and which is extended into a worm gear mechanism (14) which is arranged downstream of the electric motor (12) and engages in a worm wheel which is surrounded by a gear mechanism housing (22), and an electronic housing (16) for accommodating motor control and/or power electronics, and the electronic housing (16) has an electronic housing body (26) and an electronic housing lid (24) which closes off the electronic housing body (26) from the outside, the electronic housing lid (24) being detachably arranged on the part of the gear mechanism housing (22) which contains the worm wheel of the worm gear mechanism (14), **characterized in that** at least one element (32), which supports the electronic housing lid (24) against the gear mechanism housing (16), is arranged between the electronic housing lid (24) and the gear mechanism housing (16).

2. Electric motor drive according to Claim 1, **characterized in that** the element for supporting the electronic housing lid (24) is a spring (36) which is guided in at least one groove (34).

3. Electric motor drive according to Claim 2, **characterized in that** a transverse spring (37) is arranged on the spring (36).

4. Electric motor drive according to one of the preceding claims, **characterized in that** the electronic housing body (26) is attached to the electronic housing lid (24).

5. Electric motor drive according to one of the preceding claims, **characterized in that** the electronic housing lid (24) is attached to the gear mechanism housing (22) by means of at least one hook-in device (28, 30).

6. Electric motor drive according to one of the preceding claims, **characterized in that** the element (32) exerts forces on the electronic housing lid (24) and the gear mechanism housing (22) which are opposed in such a way that the hook-in device (28, 30) and the element (32) are securely fixed.

7. Electric motor drive according to one of Claims 5 or 6, **characterized in that** the hook-in device (28, 30) is composed of a latching hook (28) which latches into a corresponding latching means (30) which is arranged on the gear mechanism housing (22).

8. Electric motor drive according to Claim 7, **characterized in that** the corresponding latching means (30) is formed on a screw-on dome (31) of the gear mechanism housing (22).

9. Electric motor drive according to one of the preceding claims, **characterized in that** the electronic housing lid (24) can be attached to the gear mechanism housing (22) by means of at least one screw connection and/or can be fastened by a clamping connection.

10. Electric motor drive according to one of the preceding claims, **characterized in that** the electronic housing lid (24) has an intermediate flange (20) which is arranged between a pole pot (18) of the electric motor (12) and the gear mechanism housing (22).

11. Electric motor drive according to one of the preceding claims, **characterized by** the use as a drive unit for actuation systems in motor vehicles.

## Revendications

1. Entraînement électromoteur comprenant un moteur électrique (12) avec un arbre d'induit moteur configuré sous forme d'un arbre de vis sans fin, qui est prolongé dans un engrenage de vis sans fin (14) disposé dans le moteur électrique (12) et s'engrène dans une roue à vis sans fin entourée par un boîtier de transmission (22), ainsi qu'un boîtier d'électronique (16) destiné à recevoir une électronique de commande motrice et/ou de puissance, dont le boîtier d'électronique (16) présente un corps de boîtier de l'électronique (26) et un couvercle de boîtier de l'électronique (24) isolant le corps de boîtier de l'électronique (26) vers l'extérieur, le couvercle de boîtier de l'électronique (24) étant amovible dans la partie du boîtier de transmission (22) contenant la roue de vis sans fin de l'engrenage de vis sans fin (14),
**caractérisé en ce qu'**
entre le couvercle de boîtier de l'électronique ( 24) et le boîtier de transmission (16), au moins un élément (32) applique le couvercle de boîtier de l'électronique (24) contre le boîtier de transmission (16).

2. Entraînement électromoteur selon la revendication 1,
**caractérisé en ce que**
l'élément d'appui du couvercle de boîtier de l'électronique (24) est un ressort (36) introduit dans au moins une rainure (34).

3. Entraînement électromoteur selon la revendication 2,
**caractérisé en ce qu'**
un ressort transversal (37) est disposé sur le ressort (36).

4. Entraînement électromoteur selon l'une des revendications précédentes,
**caractérisé en ce que**
le corps de boîtier de l'électronique (26) est fixé au couvercle de boîtier de l'électronique (24).

5. Entraînement électromoteur selon l'une des revendications précédentes,
**caractérisé en ce que**
le couvercle de boîtier de l'électronique (24) est fixé au boîtier de transmission (22) par au moins un dispositif d'accrochage (28, 30).

6. Entraînement électromoteur selon l'une des revendications précédentes,
**caractérisé en ce que**
l'élément (32) exerce des forces opposées sur le couvercle de boîtier de l'électronique (24) et le boîtier de transmission (22), de telle sorte que le dispositif d'accrochage (28, 30) et l'élément (32) sontt fixés de manière sure.

7. Entraînement électromoteur selon l'une des revendications 5 ou 6,
**caractérisé en ce que**
le dispositif d'accrochage (28, 30) est composé d'un crochet d'arrêt (28) qui s'enclenche dans un moyen d'enclenchement (30) disposé dans le boîtier de transmission (22).

8. Entraînement électromoteur selon la revendication 7,
**caractérisé en ce que**
le moyen d'enclenchement (30) est aménagé sur une calotte de vissage (31) du boîtier de transmission (22).

9. Entraînement électromoteur selon l'une des revendications précédentes,
**caractérisé en ce que**
le couvercle de boîtier de l'électronique (24) peut être fixé au et/ou pincé dans le boîtier de transmission (22) par au moins une liaison boulonnée.

10. Entraînement électromoteur selon l'une des revendications précédentes,
**caractérisé en ce que**
le couvercle de boîtier de l'électronique (24) présente une bride intercalaire (20) entre un godet de sortie (18) du moteur électrique (12) et le boîtier de transmission (22).

11. Entraînement électromoteur selon l'une des revendications précédentes,
**caractérisé par**
une utilisation sous forme d'unité motrice pour des blocs de puissance de véhicules automobiles.
